# EUROPEAN PATENT APPLICATION

(11) **EP 2 996 239 A2**
(43) Date of publication of application: **16.03.2016**
(21) Application number: 15180145.3
(22) Date of filing: 07.08.2015
(51) Int. Cl.: H02M 7/487, H02M 7/49

(54) **MULTILEVEL CONVERTER**

(30) Priority: 11.08.2014 CN 201410392191
(71) Applicant: GE Energy Power Conversion Technology Ltd, Rugby Warwickshire CV21 1BU (GB)
(72) Inventor: XU, Yong, 201203 Shanghai (CN); ZHANG, Fan, 201203 Shanghai (CN); SCHROEDER, Stefan, 85748 Munich (DE)
(74) Representative: Serjeants LLP

(57) **Abstract**

A multilevel converter (100) is disclosed. The multilevel converter (100) comprises a first switching branch (101) connected between a positive DC-link terminal (P) and an AC output terminal (a) and comprising series-connected first and second switching elements (S1, S2), a second switching branch (102) connected between the AC output terminal (a) and a negative DC-link terminal (N) and comprising series-connected third and fourth switching elements (S3, S4), a third switching branch (103) connected between a DC-link neutral point (M) and a connection point (1) of the first and the second switching elements (S1, S2), a fourth switching branch (104) connected between the DC-link neutral point (M) and a connection point (2) of the third and the fourth switching elements (S3, S4), the fourth switching branch (104) being completely independent from the third switching branch (103), and a flying capacitor (Cf) connected between the connection point (1) of the first and the second switching elements (S1, S2) and the connection point (2) of the third and the fourth switching elements (S3, S4).

## Description

### BACKGROUND

This disclosure relates generally to semiconductor power conversion technology, and more particularly to a multilevel converter for outputting a plurality of voltage levels.

A multilevel converter usually uses a plurality of power semiconductor switches which are coupled to a lower DC-link (Direct Current-link) voltage to perform a power conversion by generating a step voltage waveform. A multilevel converter can effectively reduce harmonic distortions and dv/dt of output voltage and improve harmonic performance of output voltage. As a result, the use of multilevel converter has become popular in recent years for high voltage and high power applications such as utility interface and motor drives.

There are many different topologies to realize a multilevel power converter, such as a neutral-point clamped (NPC) converter topology, a neutral-point piloted (NPP) converter topology, a flying capacitor (FC) converter topology, H-bridge converter topology and etc.

### BRIEF DESCRIPTION

In one aspect of embodiments of the present invention, a multilevel converter is provided. The multilevel converter comprises:
a first switching branch connected between a positive DC-link terminal and an AC output terminal and comprising series-connected first switching element and second switching element;
a second switching branch connected between the AC output terminal and a negative DC-link terminal and comprising series-connected third switching element and fourth switching element;
a third switching branch connected between a DC-link neutral point and a connection point of the first and the second switching elements of the first switching branch;
a fourth switching branch connected between the DC-link neutral point and a connection point of the third and the fourth switching elements of the second switching branch, wherein the fourth switching branch is completely independent from the third switching branch; and
a flying capacitor connected between the connection point of the first and the second switching elements of the first switching branch and the connection point of the third and the fourth switching elements of the second switching branch.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic circuit diagram of a three-phase multilevel converter in accordance with a first embodiment of the present invention;
FIG. 2 is a schematic circuit diagram of a phase leg of the multilevel converter of FIG. 1;
FIG. 3 illustrates another implementation of a bidirectional power semiconductor switch module with a bidirectional-controlled current-carrying direction of FIG. 2;
FIGS. 4a and 4b illustrate a current-conducting path when the multilevel converter of FIG. 2 outputs a first voltage level;
FIGS. 5a and 5b illustrate a current-conducting path when the multilevel converter of FIG. 2 outputs a second voltage level;
FIGS. 6a and 6b illustrate a current-conducting path when the multilevel converter of FIG. 2 outputs a third voltage level;
FIGS. 6c and 6d illustrate another current-conducting path when the multilevel converter of FIG. 2 outputs the third voltage level;
FIGS. 7a-7d illustrate a current-conducting path when the multilevel converter of FIG. 2 outputs a fourth voltage level;
FIGS. 8a-8d illustrate a current-conducting path when the multilevel converter of FIG. 2 outputs a fifth voltage level;
FIG. 9a illustrates operations of semiconductor switches of the multilevel converter of FIG. 2 when the electrical current is positive;
FIG. 9b illustrates operations of semiconductor switches of the multilevel converter of FIG. 2 when the electrical current is negative;
FIG. 10 is a schematic circuit diagram of a multilevel converter in accordance with a second embodiment of the present invention; and
FIG. 11 is a schematic circuit diagram of a multilevel converter in accordance with a third embodiment of the present invention.

### DETAILED DESCRIPTION

Embodiments of the present disclosure will be described hereinbelow with reference to the accompanying drawings. In the following description, well-known functions or constructions are not described in detail to avoid obscuring the disclosure in unnecessary detail.

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean either or all of the listed items. The use of "including," "comprising" or "having" and variations thereof herein are meant to encompass the items listed thereafter and equivalents thereof as well as additional items.

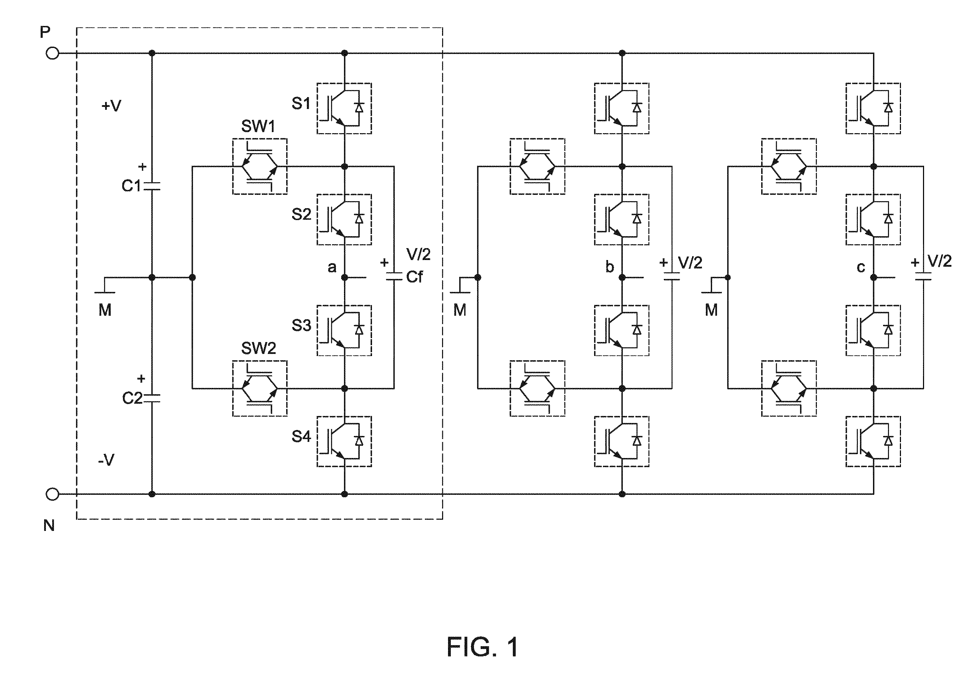

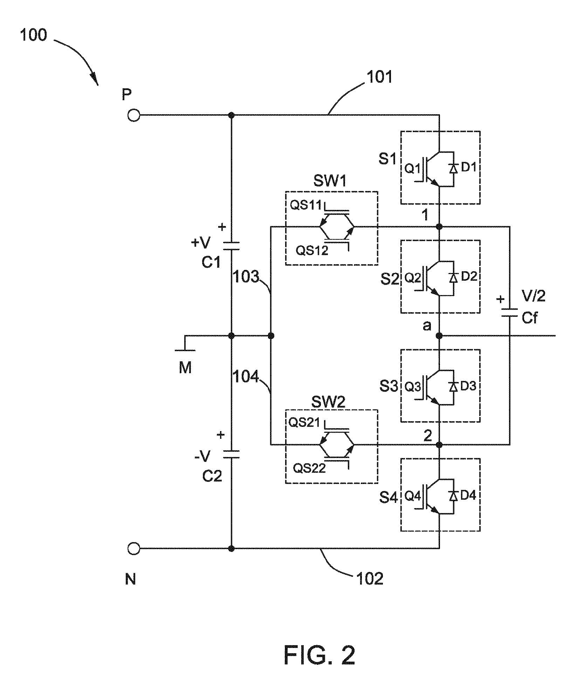

FIG. 1 illustrates a schematic circuit diagram of a three-phase multilevel converter in accordance with a first embodiment of the present invention, and FIG. 2 is a schematic circuit diagram of a phase leg of the multilevel converter of FIG. 1. As shown in FIGS. 1 and 2, the multilevel converter 100 in accordance with the first embodiment of the present invention comprises a positive DC-link terminal P and a negative DC-link terminal N for input of a DC-link voltage, and a first capacitor C1 and a second capacitor C2 connected in series between the positive DC-link terminal P and the negative DC-link terminal N. A DC-link neutral point M is located between the first capacitor C1 and the second capacitor C2.

With reference to FIG. 2, the multilevel converter 100 comprises a first switching branch 101 connected between the positive DC-link terminal P and an AC (Alternating Current) output terminal a, and a second switching branch 102 connected between the AC output terminal a and the negative DC-link terminal N. The first switching branch 101 comprises series-connected first switching element S1 and second switching element S2. The second switching branch 102 comprises series-connected third switching element S3 and fourth switching element S4. The multilevel converter 100 further comprises a third switching branch 103, a fourth switching branch 104 and a flying capacitor Cf. The third switching branch 103 is connected between the DC-link neutral point M and a connection point 1 of the first switching element S1 and the second switching element S2 of the first switching branch 101. The fourth switching branch 104 is connected between the DC-link neutral point M and a connection point 2 of the third switching element S3 and the fourth switching element S4 of the second switching branch 102. The third switching branch 103 is completely independent from the fourth switching branch 104, which means in this specification that firstly, the third switching branch 103 is independent from the fourth switching branch 104 in their respective elements, and the third switching branch 103 and the fourth switching branch 104 have no common elements; secondly, the currents flowing through the third switching branch 103 and the fourth switching branch 104 are independent from each other, that is, there is no common current-conducting path in the third switching branch 103 and the fourth switching branch 104. Therefore, the third switching branch 103 and the fourth switching branch 104 are completely independent in the control and have a simple control, resulting in reducing layout complexity of elements, and reducing current load in the switching branches, facilitating to heat dissipation of elements and increasing lifetime of elements. The flying capacitor Cf is connected between the connection point 1 of the first switching element S1 and the second switching element S2 of the first switching branch 101 and the connection point 2 of the third switching element S3 and the fourth switching element S4 of the second switching branch 102.

The first switching element S1 comprises a bidirectional power semiconductor switch module with a unidirectional-controlled current-carrying direction, in this embodiment, the first switching element S1 comprises antiparallel-connected first unidirectional semiconductor switch Q1 with a unidirectional-controlled current-carrying direction and first free-wheeling diode D1. In one embodiment, the first semiconductor switch Q1 may be an insulated gate bipolar transistor (IGBT). In another embodiment, the first semiconductor switch Q1 may also be an integrated gate commutated thyristor (IGCT).

The second switching element S2 comprises a bidirectional power semiconductor switch module with a unidirectional-controlled current-carrying direction, in this embodiment, the second switching element S2 comprises antiparallel-connected second unidirectional semiconductor switch Q2 with a unidirectional-controlled current-carrying direction and second free-wheeling diode D2. In one embodiment, the second semiconductor switch Q2 may be an IGBT. In another embodiment, the second semiconductor switch Q2 may also be an IGCT.

The first switching element S1 and the second switching element S2 both have a controlled current-carrying direction from the positive DC-link terminal P to the AC output terminal a.

The third switching element S3 comprises a bidirectional power semiconductor switch module with a unidirectional-controlled current-carrying direction, in this embodiment, the third switching element S3 comprises antiparallel-connected third unidirectional semiconductor switch Q3 with a unidirectional-controlled current-carrying direction and third free-wheeling diode D3. In one embodiment, the third semiconductor switch Q3 may be an IGBT. In another embodiment, the third semiconductor switch Q3 may also be an IGCT.

The fourth switching element S4 comprises a bidirectional power semiconductor switch module with a unidirectional-controlled current-carrying direction, in this embodiment, the fourth switching element S4 comprises antiparallel-connected fourth unidirectional semiconductor switch Q4 with a unidirectional-controlled current-carrying direction and fourth free-wheeling diode D4. In one embodiment, the fourth semiconductor switch Q4 may be an IGBT. In another embodiment, the fourth semiconductor switch Q4 may also be an IGCT.

The third switching element S3 and the second switching element S2 both have a controlled current-carrying direction from the AC output terminal a to the negative DC-link terminal N.

In this embodiment, the third switching branch 103 comprises a first bidirectional power semiconductor switch module SW1 with a bidirectional-controlled current-carrying direction. In one embodiment, the first power semiconductor switch module SW1 comprises two antiparallel-connected unidirectional semiconductor switches QS11 and QS12 with a unidirectional-controlled current-carrying direction. In one embodiment, the semiconductor switches QS11 and QS12 may be an IGBT. In another embodiment, the semiconductor switches QS11 and QS12 may also be an IGCT. Alternatively, in yet another embodiment, one of the semiconductor switches QS11 and QS12 may also be an IGBT, and the other of the semiconductor switches QS11 and QS12 may also be an IGCT.

In this embodiment, the fourth switching branch 104 comprises a second bidirectional power semiconductor switch module SW2 with a bidirectional-controlled current-carrying direction. In one embodiment, the second power semiconductor switch module SW2 comprises two antiparallel-connected unidirectional semiconductor switches QS21 and QS22 with a unidirectional-controlled current-carrying direction. In one embodiment, the semiconductor switches QS21 and QS22 may be an IGBT. In another embodiment, the semiconductor switches QS21 and QS22 may also be an IGCT. Alternatively, in yet another embodiment, one of the semiconductor switches QS21 and QS22 may also be an IGBT, and the other of the semiconductor switches QS21 and QS22 may also be an IGCT.

It should be noted that although the first, the second, the third and the fourth semiconductor switches Q1, Q2, Q3, Q4 and the semiconductor switches QS11, QS12, QS21, QS22 may comprises an IGBT or an IGCT for purposes of example, the present invention should not be limited hereinto, but rather may additionally or alternatively use other switching devices which may be made of any proper semiconductor materials. In addition, the first, the second, the third and the fourth semiconductor switches Q1, Q2, Q3, Q4 and the semiconductor switches QS11, QS12, QS21, QS22 may be the same, or may be different, or even part of them may be the same and part of them may be different. All of the switching devices made of any proper semiconductor materials to realize a unidirectional switching function with a unidirectional-controlled current-carrying direction should be included in a protecting scope of the semiconductor switches of the present invention.

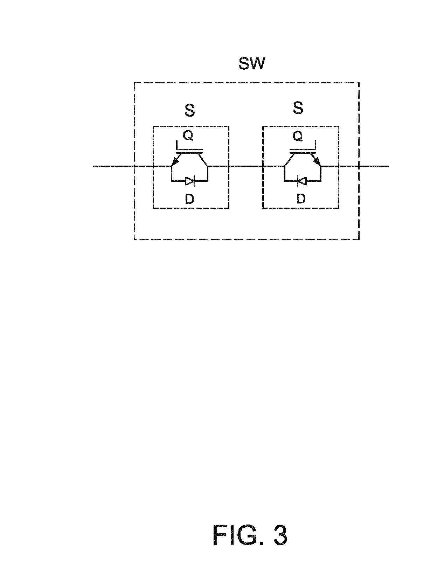

In the most figures of the present invention, the first and the second power semiconductor switch modules SW1, SW2 of the present invention both are constituted by two antiparallel-connected unidirectional semiconductor switches with a unidirectional-controlled current-carrying direction for purposes of example, which have reverse blocking ability. However, the first and the second bidirectional power semiconductor switch modules SW1 and SW2 with the bidirectional-controlled current-carrying direction of the present invention should not be limited to a type constituted by semiconductor elements with reverse blocking ability (referred to as a first type), the first and the second bidirectional power semiconductor switch modules SW1 and SW2 of the bidirectional-controlled current-carrying direction may also adopt a type constituted by semiconductor elements without reverse blocking ability (referred to as a second type), for example an implementation of the bidirectional power semiconductor switch module with the bidirectional-controlled current-carrying direction of FIG. 3. As shown in FIG. 3, such the bidirectional power semiconductor switch module SW with the bidirectional-controlled current-carrying direction constituted by the semiconductor elements without reverse blocking ability comprises two antiseries-connected bidirectional power semiconductor switching modules S with a unidirectional-controlled current-carrying direction, each bidirectional semiconductor switching module S with the unidirectional-controlled current-carrying direction comprises antiparallel-connected unidirectional semiconductor switch Q1 with a unidirectional-controlled current-carrying direction and free-wheeling diode D. It should be noted that the first and the second bidirectional power semiconductor switch modules SW1 and SW2 of the bidirectional-controlled current-carrying direction of the present invention both may adopt the first type, or both may adopt the second type, even or may adopt a combination of the first type and the second type.

The present invention also provides a method for operating the multilevel converter 100, which comprises:
controlling to turn on the first and the second switching elements S1 and S2 of the first switching branch 101 so that the AC output terminal a may output a first voltage level;
controlling to turn on the third and the fourth switching elements S3 and S4 of the second switching branch 102 so that the AC output terminal a may output a second voltage level;
controlling to turn on the first power semiconductor switch module SW1 of the third switching branch 103 and the second switching element S2 of the first switching branch 101, or controlling to turn on the second power semiconductor switch module SW2 of the fourth switching branch 104 and the third switching element S3 of the second switching branch 102 so that the AC output terminal a may output a third voltage level;
controlling to alternate turning-on states of the first switching element S1 of the first switching branch 101 and the third switching element S3 of the second switching branch 102, and turning-on states of the second switching element S2 of the first switching branch 101 and the second power semiconductor switch module SW2 of the fourth switching branch 104 so that the AC output terminal a may output a fourth voltage level; and
controlling to alternate turning-on states of the second switching element S2 of the first switching branch 101 and the fourth switching element S4 of the second switching branch 102, and turning-on states of the third switching element S3 of the second switching branch 102 and the first power semiconductor switch module SW1 of the third switching branch 103 so that the AC output terminal a may output a fifth voltage level.

An embodiment of the multilevel converter 100 of the present invention how to realize a five-level output will be described in detail hereinbelow with reference to the accompanying drawings.

For example, a DC-link voltage whose voltage value is 2V is subdivided into two equal voltage levels which are respectively input to the positive DC-link terminal P and the negative DC-link terminal N. The flying capacitor Cf is charged to a quarter of the DC-link voltage, that is, a voltage value of the flying capacitor Cf is V/2, so the AC output terminal a may output any one of five voltage levels including V, -V, 0, V/2 and -V/2. The voltage level output by the AC output terminal a is relative to the DC-link neutral point M, which is represented as V_{aM}.

### 1) For a voltage level V_{aM}=V output by the AC output terminal a (referred to as a first voltage level)

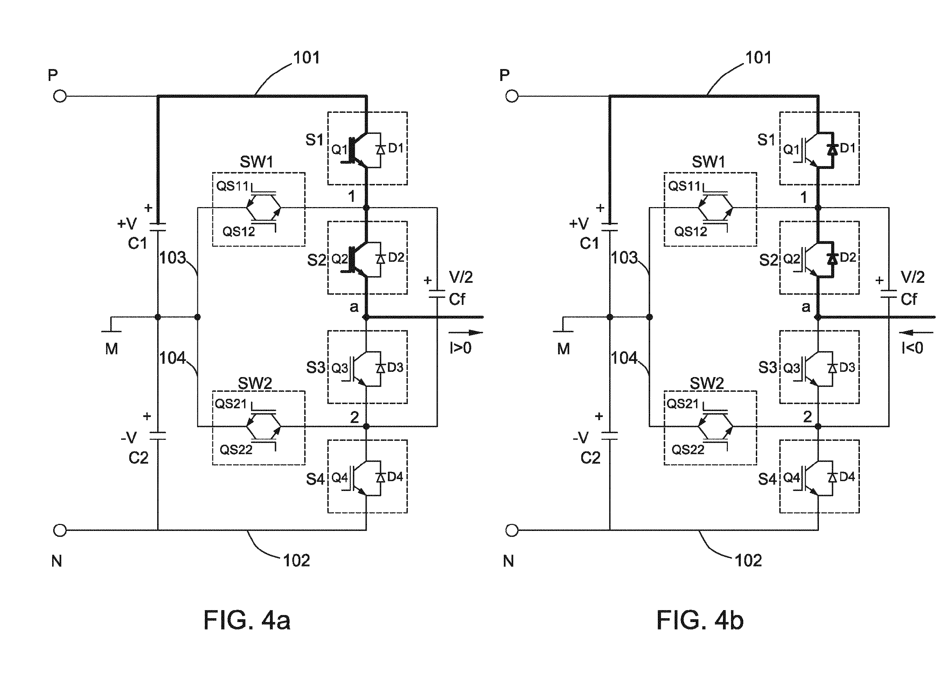

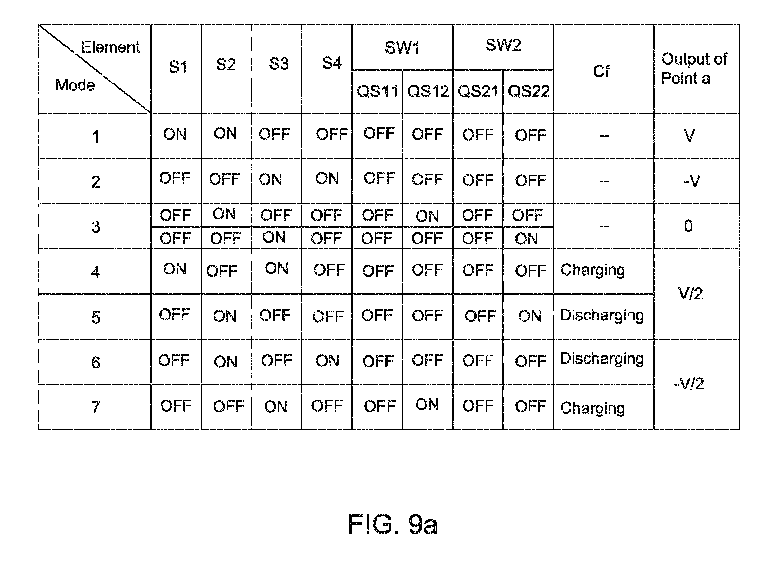

When the electrical current I is positive, i.e. I>0, with reference to FIG. 4a in conjunction with FIG. 9a, the first switching element S1 and the second switching element S2 are turned on, and the third and the fourth switching elements S3, S4 and the first and the second power semiconductor switch modules SW1, SW2 are all turned off, so the electrical current flows through the path as following: the first capacitor C1→the first semiconductor switch Q1 of the first switching element S1→the second semiconductor switch Q2 of the second switching element S2→the AC output terminal a (as shown in a heavy line of FIG. 4a), then the AC output terminal a will output a voltage level V.

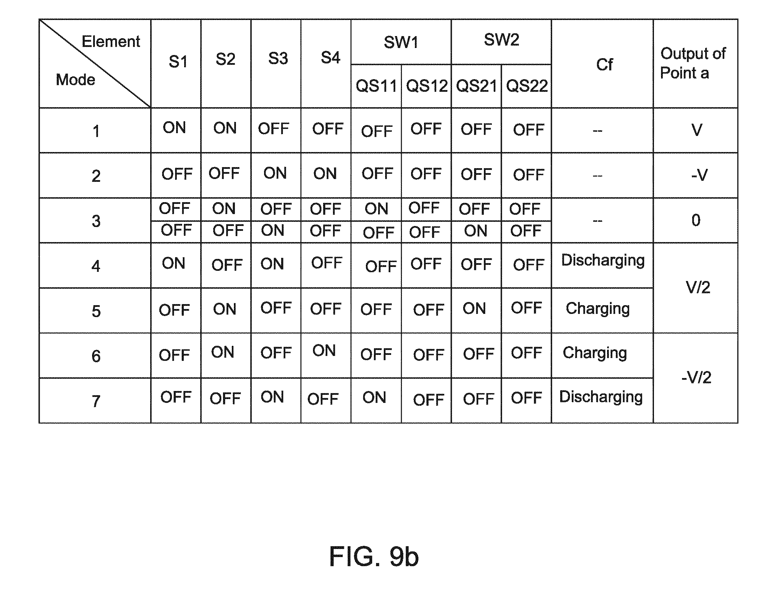

When the electrical current I is negative, i.e. I<0, with reference to FIG. 4b in conjunction with FIG. 9b, the first switching element S1 and the second switching element S2 are turned on, and the third and the fourth switching elements S3, S4 and the first and the second power semiconductor switch modules SW1, SW2 are all turned off, so the electrical current flows through the path as following: the AC output terminal a→the second free-wheeling diode D2 of the second switching element S2→the first free-wheeling diode D1 of the first switching element S1→the first capacitor C1 (as shown in a heavy line of FIG. 4b), then the AC output terminal a will output a voltage level V.

### 2) For a voltage level V_{aM}=-V output by the AC output terminal a (referred to as a second voltage level)

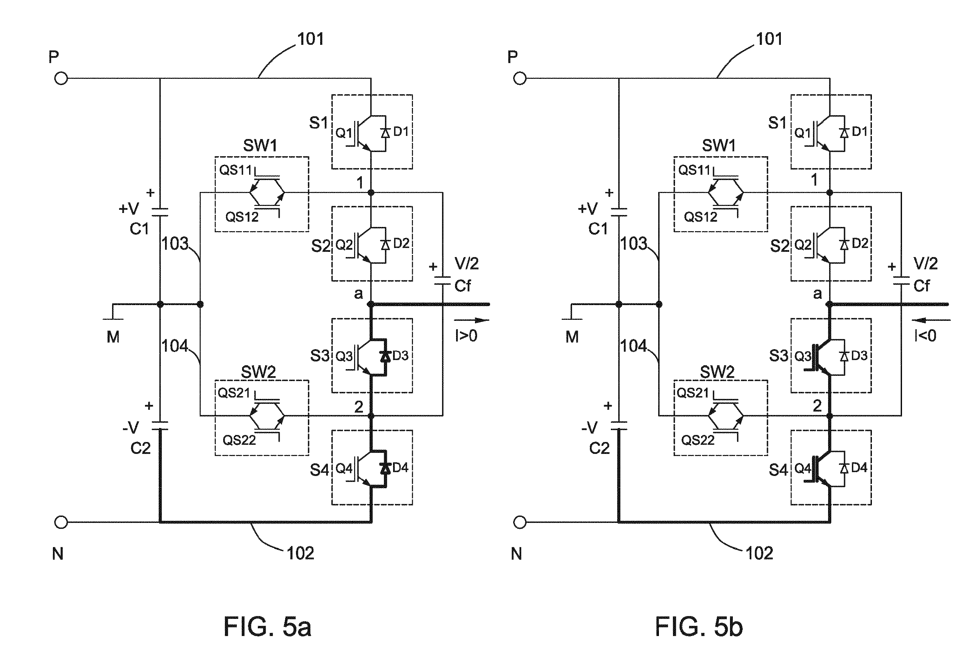

When I>0, with reference to FIG. 5a in conjunction with FIG. 9a, the third switching element S3 and the fourth switching element S4 are turned on, and the first and the second switching elements S1, S2 and the first and the second power semiconductor switch modules SW1, SW2 are all turned off, so the electrical current flows through the path as following: the second capacitor C2→the fourth free-wheeling diode D4 of the fourth switching element S4→the third free-wheeling diode D3 of the third switching element S3→the AC output terminal a (as shown in a heavy line of FIG. 5a), then the AC output terminal a will output a voltage level -V.

When I<0, with reference to FIG. 5b in conjunction with FIG. 9b, the third switching element S3 and the fourth switching element S4 are turned on, and the first and the second switching elements S1, S2 and the first and the second power semiconductor switch modules SW1, SW2 are all turned off, so the electrical current flows through the path as following: the AC output terminal a→the third semiconductor switch Q3 of the third switching element S3→the fourth semiconductor switch Q4 of the fourth switching element S4→the second capacitor C2 (as shown in a heavy line of FIG. 5b), then the AC output terminal a will output a voltage level -V.

### 3) For a voltage level V_{aM}=0 output by the AC output terminal a (referred to as a third voltage level)

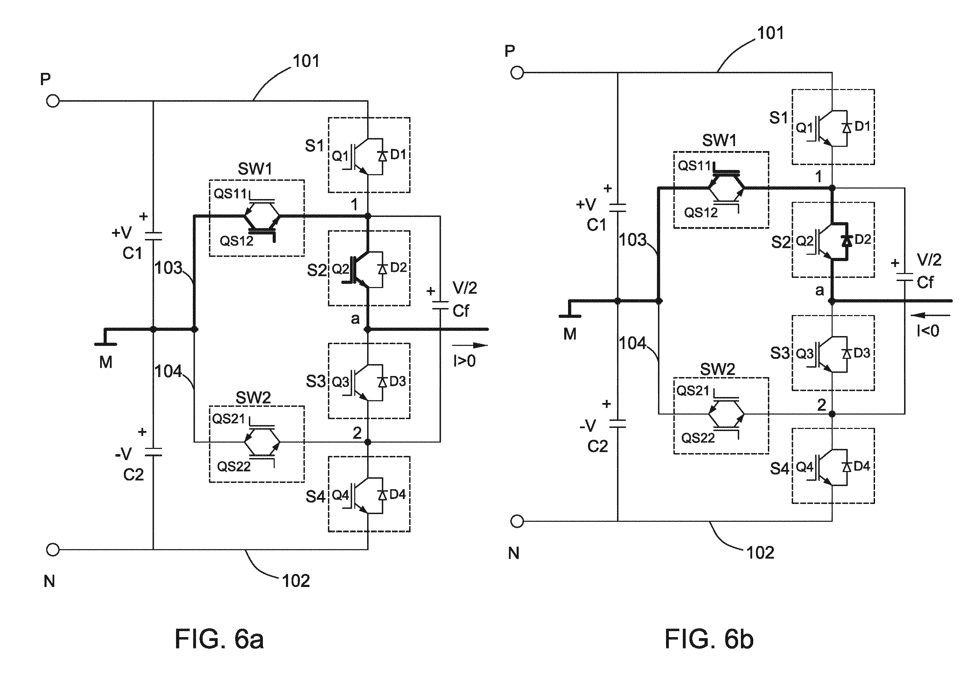

When I>0, with reference to FIG. 6a in conjunction with FIG. 9a, the semiconductor switch QS12 of the first power semiconductor switch module SW1 and the second switching element S2 are turned on, and the semiconductor switch QS11 of the first power semiconductor switch module SW1, the second power semiconductor switch module SW2 and the first, the third and the fourth switching elements S1, S3, S4 are all turned off, so the electrical current flows through the path as following: the DC-link neutral point M→ the semiconductor switch QS12 of the first power semiconductor switch module SW1→the second semiconductor switch Q2 of the second switching element S2→the AC output terminal a (as shown in a heavy line of FIG. 6a), then the AC output terminal a will output a voltage level 0.

When I<0, with reference to FIG. 6b in conjunction with FIG. 9b, the semiconductor switch QS11 of the first power semiconductor switch module SW1 and the second switching element S2 are turned on, and the semiconductor switch QS12 of the first power semiconductor switch module SW1, the second power semiconductor switch module SW2 and the first, the third and the fourth switching elements S1, S3, S4 are all turned off, so the electrical current flows through the path as following: the AC output terminal a→the second free-wheeling diode D2 of the second switching element S2→the semiconductor switch QS11 of the first power semiconductor switch module SW1→the DC-link neutral point M (as shown in a heavy line of FIG. 6b), then the AC output terminal a will output a voltage level 0.

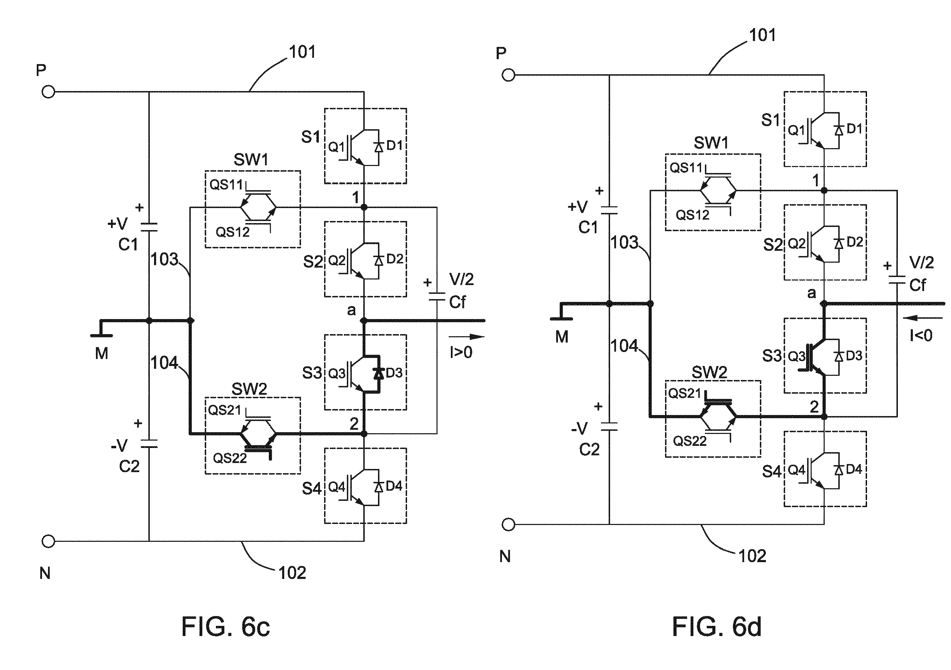

The present invention also provides an alternative controlling method of switch states when the AC output terminal a outputs the voltage level 0, please referring to FIGS. 6c and 6d in detail.

When I>0, with reference to FIG. 6c in conjunction with FIG. 9a, the semiconductor switch QS22 of the second power semiconductor switch module SW2 and the third switching element S3 are turned on, and the semiconductor switch QS21 of the second power semiconductor switch module SW2, the first power semiconductor switch module SW1 and the first, the second and the fourth switching elements S1, S2, S4 are all turned off, so the electrical current flows through the path as following: the DC-link neutral point M→ the semiconductor switch QS22 of the second power semiconductor switch module SW2→the third free-wheeling diode D3 of the third switching element S3→the AC output terminal a (as shown in a heavy line of FIG. 6c), then the AC output terminal a will also output a voltage level 0.

When I<0, with reference to FIG. 6d in conjunction with FIG. 9b, the semiconductor switch QS21 of the second power semiconductor switch module SW2 and the third switching element S3 are turned on, and the semiconductor switch QS22 of the second power semiconductor switch module SW2, the first power semiconductor switch module SW1 and the first, the second and the fourth switching elements S1, S2, S4 are all turned off, so the electrical current flows through the path as following: the AC output terminal a→the third semiconductor switch Q3 of the third switching element S3→the semiconductor switch QS21 of the second power semiconductor switch module SW2→the DC-link neutral point M (as shown in a heavy line of FIG. 6d), then the AC output terminal a will also output a voltage level 0.

### 4) For a voltage level V_{aM}=V/2 output by the AC output terminal a (referred to as a fourth voltage level)

When I>0

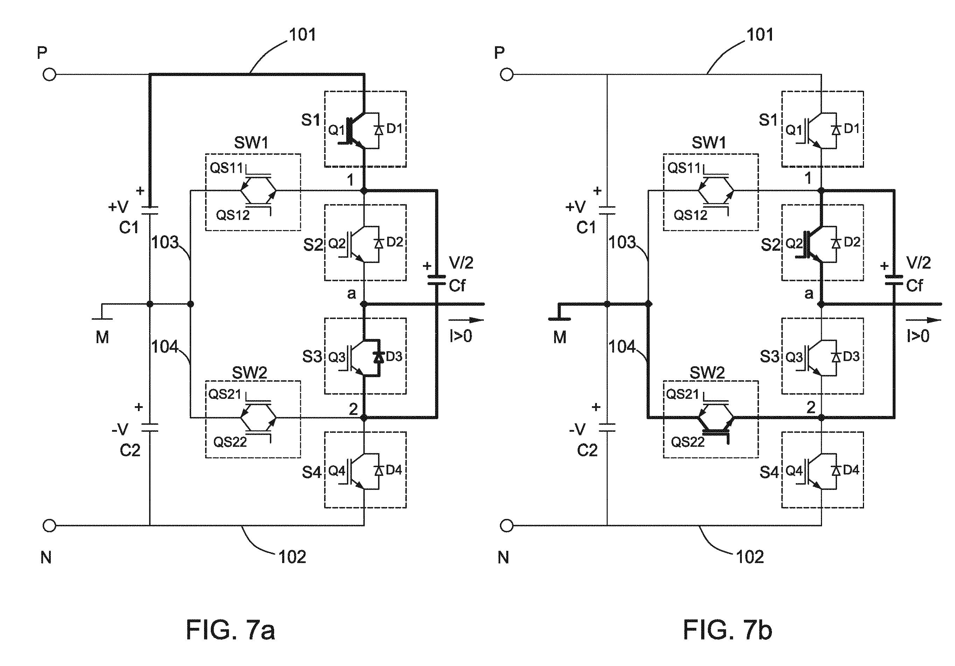

With reference to FIG. 7a in conjunction with FIG. 9a, the first switching element S1 and the third switching element S3 are turned on, and the second and the fourth switching elements S2, S4 and the first and the second power semiconductor switch modules SW1, SW2 are all turned off, so the electrical current flows through the path as following: the first capacitor C1→the first semiconductor switch Q1 of the first switching element S1→the flying capacitor Cf→the third free-wheeling diode D3 of the third switching element S3→ the AC output terminal a (as shown in a heavy line of FIG. 7a), then the flying capacitor Cf is charged and the AC output terminal a will output a voltage level V/2.

With reference to FIG. 7b in conjunction with FIG. 9a, the second switching element S2 and the semiconductor switch QS22 of the second power semiconductor switch module SW2 are turned on, and the semiconductor switch QS21 of the second power semiconductor switch module SW2, the first power semiconductor switch module SW1 and the first, the third and the fourth switching elements S1, S3, S4 are all turned off, so the electrical current flows through the path as following: the DC-link neutral point M→the semiconductor switch QS22 of the second power semiconductor switch module SW2→the flying capacitor Cf→the second semiconductor switch Q2 of the second switching element S2→ the AC output terminal a (as shown in a heavy line of FIG. 7b), then the flying capacitor Cf is discharged and the AC output terminal a will output a voltage level V/2.

The charged process of the flying capacitor Cf of FIG. 7a and the discharged process of the flying capacitor Cf of FIG. 7b are alternated. The present invention can realize a redundant circuit design of the flying capacitor Cf by a proper selection of redundant semiconductor switch states so that the flying capacitor Cf can be charged and discharged alternately, resulting in the voltage of the flying capacitor Cf may be easily balanced and the AC output terminal a may output a stable voltage level of V/2.

When I<0

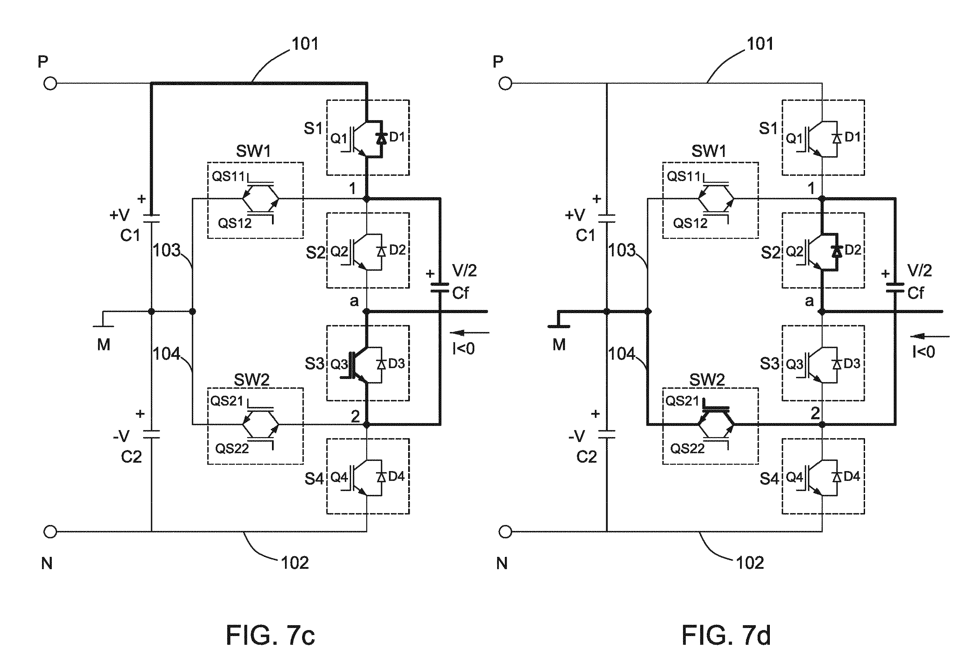

With reference to FIG. 7c in conjunction with FIG. 9b, the first switching element S1 and the third switching element S3 are turned on, and the second and the fourth switching elements S2, S4 and the first and the second power semiconductor switch modules SW1, SW2 are all turned off, so the electrical current flows through the path as following: the AC output terminal a→the third semiconductor switch Q3 of the third switching element S3→the flying capacitor Cf→the first free-wheeling diode D1 of the first switching element S1→ the first capacitor C1 (as shown in a heavy line of FIG. 7c), then the flying capacitor Cf is discharged and the AC output terminal a will output a voltage level V/2.

With reference to FIG. 7d in conjunction with FIG. 9b, the second switching element S2 and the semiconductor switch QS21 of the second power semiconductor switch module SW2 are turned on, and the semiconductor switch QS22 of the second power semiconductor switch module SW2, the first power semiconductor switch module SW1 and the first, the third and the fourth switching elements S1, S3, S4 are all turned off, so the electrical current flows through the path as following: the AC output terminal a→the second free-wheeling diode D2 of the second switching element S2→the flying capacitor Cf→the semiconductor switch QS21 of the second power semiconductor switch module SW2→ the DC-link neutral point M (as shown in a heavy line of FIG. 7d), then the flying capacitor Cf is charged and the AC output terminal a will output a voltage level V/2.

The discharged process of the flying capacitor Cf of FIG. 7c and the charged process of the flying capacitor Cf of FIG. 7d are alternated. The present invention can realize a redundant circuit design of the flying capacitor Cf by a proper selection of redundant semiconductor switch states so that the flying capacitor Cf can be charged and discharged alternately, resulting in the voltage of the flying capacitor Cf may be easily balanced and the AC output terminal a may output a stable voltage level of V/2.

### 5) For a voltage level V_{aM}=-V/2 output by the AC output terminal a (referred to as a fifth voltage level)

When I>0

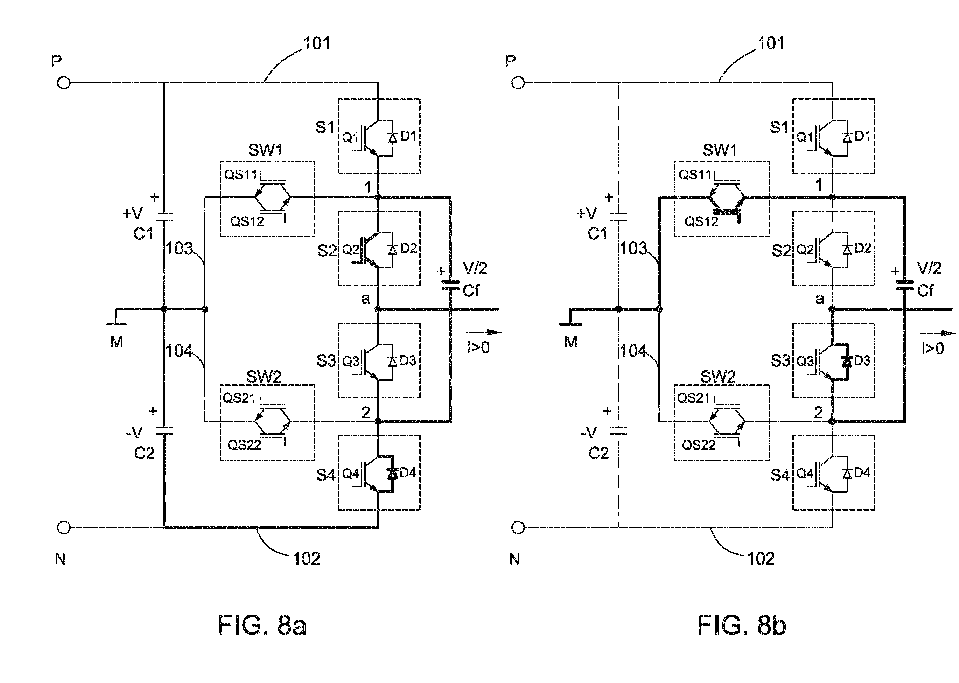

With reference to FIG. 8a in conjunction with FIG. 9a, the second switching element S2 and the fourth switching element S4 are turned on, and the first and the third switching elements S1, S3 and the first and the second power semiconductor switch modules SW1, SW2 are all turned off, so the electrical current flows through the path as following: the second capacitor C2→the fourth free-wheeling diode D4 of the fourth switching element S4→the flying capacitor Cf→the second semiconductor switch Q2 of the second switching element S2→ the AC output terminal a (as shown in a heavy line of FIG. 8a), then the flying capacitor Cf is discharged and the AC output terminal a will output a voltage level -V/2.

With reference to FIG. 8b in conjunction with FIG. 9a, the third switching element S3 and the semiconductor switch QS12 of the first power semiconductor switch module SW1 are turned on, and the semiconductor switch QS11 of the first power semiconductor switch module SW1, the second power semiconductor switch module SW2 and the first, the second and the fourth switching elements S1, S2, S4 are all turned off, so the electrical current flows through the path as following: the DC-link neutral point M→the semiconductor switch QS12 of the first power semiconductor switch module SW1→the flying capacitor Cf→the third free-wheeling diode D3 of the third switching element S3→ the AC output terminal a (as shown in a heavy line of FIG. 8b), then the flying capacitor Cf is charged and the AC output terminal a will output a voltage level -V/2.

The discharged process of the flying capacitor Cf of FIG. 8a and the charged process of the flying capacitor Cf of FIG. 8b are alternated. The present invention can realize a redundant circuit design of the flying capacitor Cf by a proper selection of redundant semiconductor switch states so that the flying capacitor Cf can be charged and discharged alternately, resulting in the voltage of the flying capacitor Cf may be easily balanced and the AC output terminal a may output a stable voltage level of -V/2.

When I<0

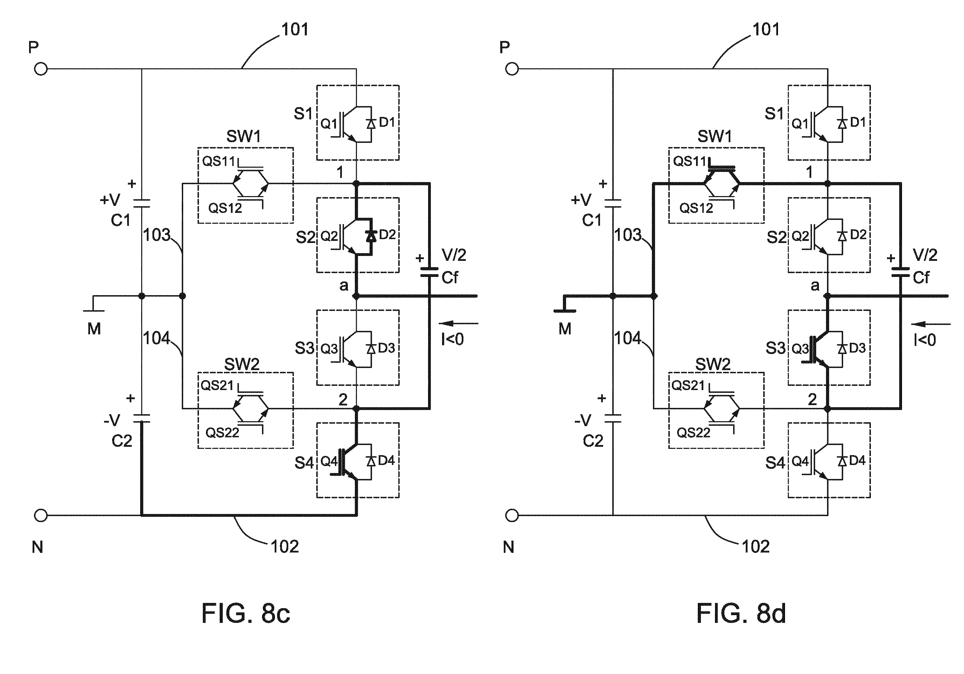

With reference to FIG. 8c in conjunction with FIG. 9b, the second switching element S2 and the fourth switching element S4 are turned on, and the first and the third switching elements S1, S3 and the first and the second power semiconductor switch modules SW1, SW2 are all turned off, so the electrical current flows through the path as following: the AC output terminal a→the second free-wheeling diode D2 of the second switching element S2→the flying capacitor Cf→ the fourth semiconductor switch Q4 of the fourth switching element S4→ the second capacitor C2 (as shown in a heavy line of FIG. 8c), then the flying capacitor Cf is charged and the AC output terminal a will output a voltage level -V/2.

With reference to FIG. 8d in conjunction with FIG. 9b, the third switching element S3 and the semiconductor switch QS11 of the first power semiconductor switch module SW1 are turned on, and the semiconductor switch QS12 of the first power semiconductor switch module SW1, the second power semiconductor switch module SW2 and the first, the second and the fourth switching elements S1, S2, S4 are all turned off, so the electrical current flows through the path as following: the AC output terminal a→the third semiconductor switch Q3 of the third switching element S3→the flying capacitor Cf→the semiconductor switch QS11 of the first power semiconductor switch module SW1→the DC-link neutral point M (as shown in a heavy line of FIG. 8d), then the flying capacitor Cf is discharged and the AC output terminal a will output a voltage level -V/2.

The charged process of the flying capacitor Cf of FIG. 8c and the discharged process of the flying capacitor Cf of FIG. 8d are alternated. The present invention can realize a redundant circuit design of the flying capacitor Cf by a proper selection of redundant semiconductor switch states so that the flying capacitor Cf can be charged and discharged alternately, resulting in the voltage of the flying capacitor Cf may be easily balanced and the AC output terminal a may output a stable voltage level of -V/2.

In comparison to a conventional five-level neutral-point clamped converter topology, the above five level topology of the multilevel converter 100 according to the present invention has a simple and symmetry structure and may reduce the control and layout complexity of the switching elements; in comparison to a conventional five-level flying capacitor converter topology, the above five level topology of the multilevel converter 100 according to the present invention uses only one flying capacitor Cf per one phase leg, resulting in easily balancing the voltage of the flying capacitor Cf. Furthermore, the multilevel converter 100 according to the present invention may reduce harmonic distortions and dv/dt of output voltage.

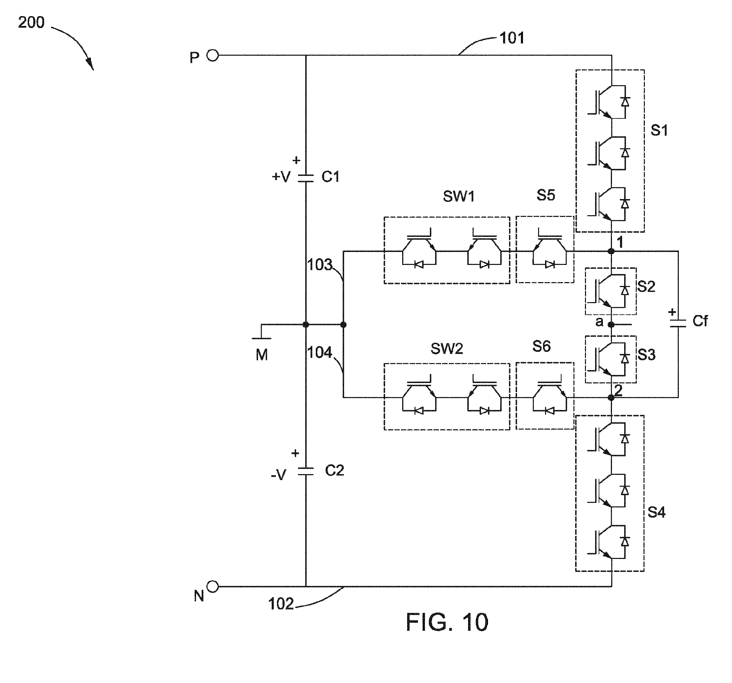

FIG. 10 illustrates a schematic circuit diagram of a multilevel converter in accordance with a second embodiment of the present invention. As shown in FIG. 10, similar to the multilevel converter 100 of FIG. 2, the multilevel converter 200 according to the second embodiment of the present invention comprises a first switching branch 101 connected between a positive DC-link terminal P and a AC output terminal a and comprising series-connected first switching element S1 and second switching element S2, a second switching branch 102 connected between the AC output terminal a and a negative DC-link terminal N and comprising series-connected third switching element S3 and fourth switching element S4, a third switching branch 103 connected between the DC-link neutral point M and a connection point 1 of the first switching element S1 and the second switching element S2 of the first switching branch 101, a fourth switching branch 104 connected between the DC-link neutral point M and a connection point 2 of the third switching element S3 and the fourth switching element S4 of the second switching branch 102 and a flying capacitor Cf connected between the connection point 1 of the first switching element S1 and the second switching element S2 of the first switching branch 101 and the connection point 2 of the third switching element S3 and the fourth switching element S4 of the second switching branch 102.

Different from the multilevel converter 100 of FIG. 2, in the multilevel converter 200 of FIG. 10, considering withstand voltage of the first switching element S1 and the second switching element S2, preferably, the first switching element S1 comprises at least one bidirectional power semiconductor switch module with a unidirectional-controlled current-carrying direction which are connected in series. More preferably, the first switching element S1 comprises three bidirectional power semiconductor switch modules with a unidirectional-controlled current-carrying direction which are connected in series. For example, in the case the second switching element S2 comprises one bidirectional power semiconductor switch module with a unidirectional-controlled current-carrying direction, the first switching element S1 may comprise three bidirectional power semiconductor switch modules with a unidirectional-controlled current-carrying direction which are connected in series and each of which is the same as the second switching element S2. Thus, the multilevel converter 200 may have more uniform elements and cost down.

Different from the multilevel converter 100 of FIG. 2, in the multilevel converter 200 of FIG. 10, considering withstand voltage of the third switching element S3 and the fourth switching element S4, preferably, the fourth switching element S4 comprises at least one bidirectional power semiconductor switch module with a unidirectional-controlled current-carrying direction which are connected in series. More preferably, the fourth switching element S4 comprises three bidirectional power semiconductor switch modules with a unidirectional-controlled current-carrying direction which are connected in series. For example, in the case the third switching element S3 comprises one bidirectional power semiconductor switch module with a unidirectional-controlled current-carrying direction, the fourth switching element S4 may comprise three bidirectional power semiconductor switch modules with a unidirectional-controlled current-carrying direction which are connected in series and each of which is the same as the third switching element S3. Thus, the multilevel converter 200 may have more uniform elements and cost down.

Further considering withstand voltage of the circuit, different from the multilevel converter 100 of FIG. 2, in the multilevel converter 200 of FIG. 10, the third switching branch 103 comprises a first bidirectional power semiconductor switch module SW1 with a bidirectional-controlled current-carrying direction and a bidirectional power semiconductor switch module S5 with a unidirectional-controlled current-carrying direction which are connected in series. The bidirectional power semiconductor switch module S5 with the unidirectional-controlled current-carrying direction has a controlled current-carrying direction from the connection point 1 of the first and the second switching elements S1, S2 of the first switching branch 101 to the DC-link neutral point M. The fourth switching branch 104 comprises a second bidirectional power semiconductor switch module SW2 with a bidirectional-controlled current-carrying direction and a bidirectional power semiconductor switch module S6 with a unidirectional-controlled current-carrying direction which are connected in series. The bidirectional power semiconductor switch module S6 with the unidirectional-controlled current-carrying direction has a controlled current-carrying direction from the DC-link neutral point M to the connection point 2 of the third and the fourth switching elements S3, S4 of the second switching branch 102. In FIG. 10, the first and the second power semiconductor switch modules SW1, SW2 with the bidirectional-controlled current-carrying direction are both illustrated to be the second type of FIG. 3 for purposes of example, that is to say, the first and the second power semiconductor switch modules SW1, SW2 with the bidirectional-controlled current-carrying direction each comprise two antiseries-connected bidirectional power semiconductor switching modules with the unidirectional-controlled current-carrying direction, and each bidirectional power semiconductor switching module with the unidirectional-controlled current-carrying direction comprises antiparallel-connected unidirectional semiconductor switch with a unidirectional-controlled current-carrying direction and free-wheeling diode. Certainly, the first and the second bidirectional power semiconductor switch modules SW1, SW2 with the bidirectional-controlled current-carrying direction of FIG. 10 both may also adopt the first type.

Similar to the multilevel converter 100 of FIG. 2, in the multilevel converter 200 of FIG. 10, the third switching branch 103 is completely independent from the fourth switching branch 104. Therefore, the third switching branch 103 and the fourth switching branch 104 are completely independent in the control and have a simple control, resulting in reducing layout complexity of elements, and reducing current load in the switching branches, facilitating to heat dissipation of elements and increasing lifetime of elements.

Besides having the similar beneficial effects to the multilevel converter 100 of FIG. 2, because of further consideration of withstand voltage of the circuit, the multilevel converter 200 of FIG. 10 has more balanced current load and more balanced heat dissipation of elements, resulting in increasing lifetime of elements, and having more uniform elements, which has better practicability.

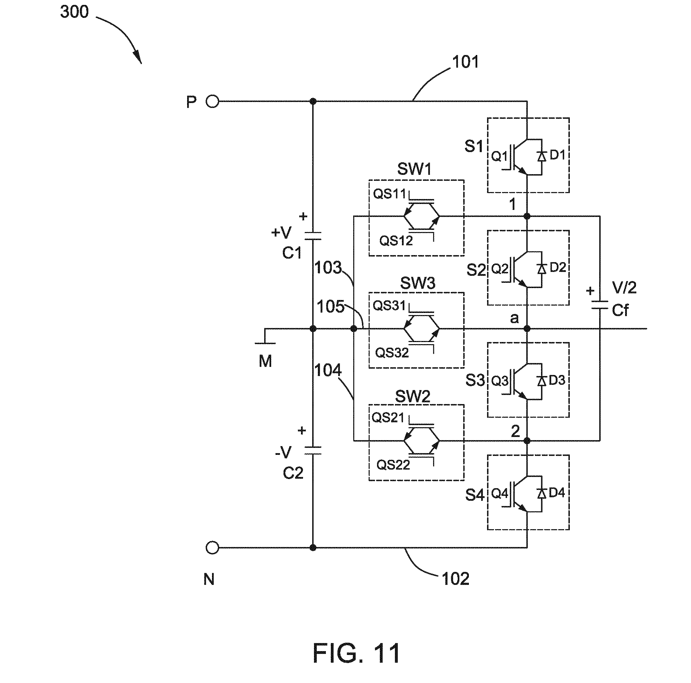

FIG. 11 illustrates a schematic circuit diagram of a multilevel converter in accordance with a third embodiment of the present invention. As shown in FIG. 11, besides having the topology of the multilevel converter 100 of FIG. 2, the multilevel converter 300 of FIG. 11 further comprises a fifth switching branch 105 connected between the DC-link neutral point M and the AC output terminal a. The fifth switching branch 105 comprises a third bidirectional power semiconductor switch module SW3 with a bidirectional-controlled current-carrying direction. The third power semiconductor switch module SW3 is illustrated to be the first type for purposes of example, that is to say, the third bidirectional power semiconductor switch module SW3 with the bidirectional-controlled current-carrying direction comprises two antiparallel-connected unidirectional semiconductor switches QS31 and QS32 with a unidirectional-controlled current-carrying direction. Certainly, the third bidirectional power semiconductor switch module SW3 with the bidirectional-controlled current-carrying direction may also adopt the second type.

In the above embodiments, the first, the second and the third bidirectional power semiconductor switch modules SW1, SW2 and SW3 with the bidirectional-controlled current-carrying direction all comprise a switch of the first type or a switch of the second type for purposes of example. However, it should be noted that in other embodiments of the present invention, the first, the second and the third bidirectional power semiconductor switch modules SW1, SW2 and SW3 with the bidirectional-controlled current-carrying direction may comprise a group consisting of the switches of the first type which are connected in series or in parallel, or a group consisting of the switches of the second type which are connected in series or in parallel.

The multilevel converter 300 of FIG. 11 has a relatively simpler control in the switch states of the switching elements by adding the fifth switching branch 105.

The multilevel converters 100, 200, 300 in accordance with the embodiments of the present invention have a simple and symmetry structure and a symmetry pulse width modulation schedule for the semiconductor switches, resulting in reducing the control and layout complexity of the semiconductor switches. The multilevel converters 100, 200, 300 in accordance with the embodiments of the present invention use only one flying capacitor per one phase leg and provide a redundant circuit design of the flying capacitor by proper selection of redundant semiconductor switch states, resulting in easily balancing the voltage of the flying capacitor. Furthermore, the multilevel converters 100, 200, 300 in accordance with the embodiments of the present invention may reduce harmonic distortions and dv/dt of output voltage.

While the disclosure has been illustrated and described in typical embodiments, it is not intended to be limited to the details shown, since various modifications and substitutions can be made without departing in any way from the spirit of the present disclosure. As such, further modifications and equivalents of the disclosure herein disclosed may occur to persons skilled in the art using no more than routine experimentation, and all such modifications and equivalents are believed to be within the spirit and scope of the disclosure as defined by the following claims.

## Claims

1. A multilevel converter (100; 300), comprising:
a first switching branch (101) connected between a positive DC-link terminal (P) and an AC output terminal (a), and comprising series-connected first switching element (S1) and second switching element (S2);
a second switching branch (102) connected between the AC output terminal (a) and a negative DC-link terminal (N), and comprising series-connected third switching element (S3) and fourth switching element (S4);
a third switching branch (103) connected between a DC-link neutral point (M) and a connection point (1) of the first and the second switching elements (S1, S2) of the first switching branch (101);
a fourth switching branch (104) connected between the DC-link neutral point (M) and a connection point (2) of the third and the fourth switching elements (S3, S4) of the second switching branch (102), wherein the fourth switching branch (104) is completely independent from the third switching branch (103); and
a flying capacitor (Cf) connected between the connection point (1) of the first and the second switching elements (S1, S2) of the first switching branch (101) and the connection point (2) of the third and the fourth switching elements (S3, S4) of the second switching branch (102).

2. A multilevel converter (100; 300) according to claim 1, wherein the first switching element (S1) comprises series-connected at least one bidirectional power semiconductor switch module with a unidirectional-controlled current-carrying direction, the second switching element (S2) comprises a bidirectional power semiconductor switch module with a unidirectional-controlled current-carrying direction, and the first and the second switching elements (S1, S2) both have a controlled current-carrying direction from the positive DC-link terminal (P) to the AC output terminal (a).

3. A multilevel converter (100; 300) according to claim 1 or claim 2, wherein the third switching element (S3) comprises a bidirectional power semiconductor switch module with a unidirectional-controlled current-carrying direction, the fourth switching element (S4) comprises series-connected at least one bidirectional power semiconductor switch module with a unidirectional-controlled current-carrying direction, and the third and the fourth switching elements (S3, S4) both have a controlled current-carrying direction from the AC output terminal (a) to the negative DC-link terminal (N).

4. A multilevel converter (100; 300) according to any preceding claim, wherein the third switching branch (103) comprises a bidirectional power semiconductor switch module (SW1) with a bidirectional-controlled current-carrying direction.

5. A multilevel converter (100; 300) according to any preceding claim, wherein the fourth switching branch (104) comprises a bidirectional power semiconductor switch module (SW2) with a bidirectional-controlled current-carrying direction.

6. A multilevel converter according to any of claims 1 to 3, wherein the third switching branch comprises a bidirectional power semiconductor switch module with a bidirectional-controlled current-carrying direction and a bidirectional power semiconductor switch module with a unidirectional-controlled current-carrying direction which are connected in series, and the bidirectional power semiconductor switch module with the unidirectional-controlled current-carrying direction of the third switching branch has a controlled current-carrying direction from the connection point of the first and the second switching elements of the first switching branch to the DC-link neutral point.

7. A multilevel converter according to any of claims 1 to 3, wherein the fourth switching branch comprises a bidirectional power semiconductor switch module with a bidirectional-controlled current-carrying direction and a bidirectional power semiconductor switch module with a unidirectional-controlled current-carrying direction which are connected in series, and the bidirectional power semiconductor switch module with the unidirectional-controlled current-carrying direction of the fourth switching branch has a controlled current-carrying direction from the DC-link neutral point to the connection point of the third and the fourth switching elements of the second switching branch.

8. A multilevel converter (100; 300) according to any of claims 2, 3, 6 and 7,
wherein the bidirectional power semiconductor switch module with the unidirectional-controlled current-carrying direction comprises antiparallel-connected unidirectional semiconductor switch (Q1, Q2, Q3, Q4) with the unidirectional-controlled current-carrying direction and free-wheeling diode (D1, D2, D3, D4).

9. A multilevel converter (100; 300) according to claim 8, wherein the unidirectional semiconductor switch (Q1, Q2, Q3, Q4) with the unidirectional-controlled current-carrying direction comprises an insulated gate bipolar transistor or an integrated gate commutated thyristor.

10. A multilevel converter (300) according to any preceding claim, further comprising:
a fifth switching branch (105) connected between the DC-link neutral point (M) and the AC output terminal (a) and comprising a bidirectional power semiconductor switch module (SW3) with a bidirectional-controlled current-carrying direction.

11. A multilevel converter (100; 300) according to any of claims 4 to 7 and 10,
wherein the bidirectional power semiconductor switch module (SW1, SW2, SW3) with the bidirectional-controlled current-carrying direction comprises a switch of a first type or a group consisting of switches of a first type which are connected in series or in parallel, and the switch of the first type comprises two antiparallel-connected unidirectional semiconductor switches (QS11, QS12, QS21, QS22, QS31, QS32), with a unidirectional-controlled current-carrying direction.

12. A multilevel converter (100; 300) according to claim 11, wherein the unidirectional semiconductor switches (QS11, QS12, QS21, QS22, QS31, QS32) with the unidirectional-controlled current-carrying direction comprises an insulated gate bipolar transistor or an integrated gate commutated thyristor.

13. A multilevel converter (100; 300) according to any of claims 4 to 7 and 10,
wherein the bidirectional power semiconductor switch module with the bidirectional-controlled current-carrying direction comprises a switch of a second type or a group consisting of switches of a second type which are connected in series or in parallel, and the switch of the second type comprises two antiseries-connected bidirectional power semiconductor switching modules with a unidirectional-controlled current-carrying direction, and each bidirectional semiconductor switching module with the unidirectional-controlled current-carrying direction comprises antiparallel-connected unidirectional semiconductor switch (Q) with a unidirectional-controlled current-carrying direction and free-wheeling diode (D).

14. A multilevel converter (100; 300) according to claim 13, wherein the unidirectional semiconductor switch (Q) with the unidirectional-controlled current-carrying direction comprises an insulated gate bipolar transistor or an integrated gate commutated thyristor.

15. A multilevel converter (100; 300) according to any preceding claim, further comprising a first capacitor (C1) and a second capacitor (C2) connected in series between the positive DC-link terminal (P) and the negative DC-link terminal (N), wherein the DC-link neutral point (M) is located between the first and the second capacitors (C1, C2).
